# EUROPÄISCHE PATENTSCHRIFT

(11) **EP 2 893 200 B1**
(45) Veröffentlichungstag und Bekanntmachung des Hinweises auf die Patenterteilung: **22.03.2017**
(21) Anmeldenummer: 13759996.5
(22) Anmeldetag: 04.09.2013
(51) Int. Cl.: F16B 11/00

(54) **VERFAHREN ZUM HERSTELLEN EINER BÖRDELNAHT**
METHOD FOR PRODUCING A RAISED SEAM
PROCÉDÉ DE FABRICATION D'UN JOINT A BORDS RELEVES

(30) Priorität: 05.09.2012 DE 102012215715; 01.10.2012 DE 102012217960
(43) Veröffentlichungstag der Anmeldung: 15.07.2015
(73) Patentinhaber: Ford Global Technologies, LLC, Dearborn, MI 48126 (US)
(72) Erfinder: FRIETSCH, Jörg, 53773 Hennef (DE); SASSMANNSHAUSEN, Jörg, 51375 Leverkusen (DE)
(74) Vertreter: Dörfler, Thomas
(86) Internationale Anmeldenummer: PCT/EP2013/068280
(87) Internationale Veröffentlichungsnummer: WO 2014/037398

(56) Entgegenhaltungen:
- DE-A1-102008 060 930
- JP-A- S5 634 579
- US-A- 5 587 042

## Beschreibung

Die vorliegende Erfindung betrifft ein Verfahren zum Herstellen einer Bördelnaht zwischen einem inneren Bauteil mit einem Fügeflansch und einem äußeren Bauteil mit einem Falzflansch.

Die Zusammenfassung der JP S56-34579 A offenbart das Erstellen einer Bördelnaht unter Verwendung von Klebstoff. Dabei wird ein Klebstoffträger mit einem Klebstoff auf den Verbindungsbereich des äußeren Elementes aufgeklebt. Der Klebstoff wird als Raupe auf den Träger aufgebracht. Der Klebstoffträger weist eine Erstreckung auf, welcher der Erstreckung des Verbindungsbereiches entspricht. Bei dem Falzen des Verbindungsbereiches deformiert sich das Trägermaterial plastisch, wobei das Trägermaterial aus dem Falzspalt heraustritt. Erst bei dem anschließenden Erhitzen schmilzt der Klebstoff.

Die US 5,587,042 A befasst sich ebenfalls mit dem Erstellen einer Bördelnaht unter Verwendung von Klebstoff. Es soll eine kombinierte Vorrichtung geschaffen werden, bei welcher ein Falzen und ein Erwärmen/Aushärten im Wesentlichen gleichzeitig durchgeführt werden kann. Ein Klebstoffstreifen ist nicht offenbart. Stattdessen wird vor dem Einbringen der Bleche in die Falzmaschine ein Tropfen eines wärmeaktivierbaren Klebstoffs mit einem Durchmesser von einem achtem Zoll auf die innere Oberfläche des äußeren Bleches aufgebracht.

Die DE 10 2008 060 930 A1 befasst sich mit einer kombinierten Falz- und Klebverbindung an einem Karosserieteil eines Kraftfahrzeuges, wobei ein Außenteil des Karosserieteils in einem Randbereich um einen Randbereich eines Innenteils des Karosserieteils gefalzt ist, wobei ein Klebstoff den Randbereich des Innenteils beidseits umgibt. Die Herstellung der Falz- und Klebverbindung soll sich vereinfachen lassen, wenn er Klebstoff durch einen zumindest während der Herstellung der Falz- und Klebverbindung knetbaren Streifenkleber gebildet ist.

Bördelnähte, die auch als Falznähte bezeichnet werden können, werden zum Verbinden eines inneren Bleches mit einem äußeren Blech angewendet. Dabei sind die beiden Bauteile dazu ausgeführt, miteinander durch Umbiegen des Falzflansches am äußeren Blech um einen freien Kantenabschnitt, den Fügeflansch, des inneren Bauteils verbunden zu werden. Schwierig ist jedoch die Bördelnaht gegen Korrosionseinwirkung zu schützen, da sich in der Falznaht, also in dem Falzspalt dauerhaft verbleibende Feuchtigkeit sammeln kann, welche den Korrosionsprozess beschleunigend beeinflusst. Auch ist bekannt, dass die Bördelnaht bei einem lediglich kraftschlüssigen Metall an Metall Kontakt nicht die erforderlichen Festigkeitseigenschaften aufweist, wie diese zum Beispiel im Fahrzeugbau gefordert werden. Bördelnähte werden beispielsweise an Hauben, Türen oder ähnlichem eingesetzt. Bekannt ist, den Falzspalt daher mit geeigneten Mitteln zu versehen, um die Korrosionsbildung zu vermeiden, und um die Verbindung insgesamt widerstandfähiger ausführen zu können.

Hierzu werden z.B. Klebstoffe verwendet, wie beispielsweise die WO94/21740 offenbart. Dabei geht die WO94/21740 von einem Verfahren zum Erreichen einer Klebeverbindung in einer Falznaht zwischen einem inneren Teil und einem äußeren Teil mit einem Kaltepoxidkleber aus, der auf die Oberfläche des Kantenbereiches des äußeren Teils aufgebracht wird, welche mit dem Kantenbereich des inneren Teils in Kontakt ist. Die beiden Teile werden aufeinander gebracht, wobei der Falzflansch umgebogen wird. Nach dem Vollenden der Falznaht, wird der Klebestreifen aufgebracht, und um die Verbindung herum gepresst, wobei allerdings nicht die komplette Bördelnaht mit dem Kleber bedeckt wird. So kann sich eine Luftblase in der Bördelnaht fangen, was mit der Lehre der WO94/21740 verhindert werden soll, indem ein Klebestreifen in einer heißen Phase vor dem Zusammenführen der beiden Bauteile und auch vor dem Falzen aufgebracht wird. Damit können wohl Luftblasen vermieden werden. Jedoch wird der heiße und flüssige Klebstoff bei dem Bördelvorgang aus der Falznaht herausgedrückt, so dass der Klebstoff Tropfen bilden kann, die, wenn diese abtropfen zu Verschmutzungen der Montagestrasse sowie der Werkzeuge nachfolgender Montagestationen führen können.

Um eine solche Verschmutzung zu vermeiden, sollte vorgesehen sein, dass der Klebstoff vor einer Weiterverarbeitung des Bauteils aushärtet. Dies wirkt sich jedoch nachteilig auf den Herstellungstakt auf, und ist zudem aufwendig und aus betriebswirtschaftlicher Sicht unrentabel.

Die EP 0 892 180 A1 schlägt vor, das innere Bauteil um seinen freien Kantenabschnitt herum mit einem vorgeformten Klebekörper zu umgeben. Der Klebekörper ist U-förmig so ausgeführt, dass dieser auf den freien Kantenabschnitt gesteckt mit Klemmkraft gehalten ist. Gegebenenfalls kann noch ein zweiseitig klebender Klebestreifen an dem längeren der beiden U-Schenkel angebracht werden, so dass zusätzlich zur Klemmkraft eine Klebkraft wirken kann. Ist der Klebekörper angebracht, werden die Bauteile zusammengebracht, wobei die Bördelnaht durch Umbiegen der Falzflansch vollendet wird. Sodann wird der Klebekörper aufgeweicht, so dass die Bauteile an der Klebestelle benetzt werden. Anschließend wird die Klebestelle ausgehärtet.

Die DE 36 21 758 offenbart ein Verfahren zum Abdichten einer Falzverbindung mittels eines durch Wärmezufuhr gelier- und/oder härtbaren Bördelnahtklebers im Falzspalt und einer diesem vorgeschalteten Versiegelungsschicht, die aus durch Wärmezufuhr gelier- und/oder härtbarem Material besteht, und auf die Schnittkante der Falzverbindung aufgetragen wird, wobei die Falzverbindung mindestens einer Wärmebehandlung unterworfen wird. Zumindest die Bördelnaht wird auf Geliertemperatur erwärmt, wobei die Versiegelungsschicht auf die erwärmte Schnittkante aufgetragen wird.

Die Herstellung einer Bördelnaht mit einem pastösen Klebstoff ist demnach ein kritischer Prozess hinsichtlich des Korrosionsschutzes, aber auch hinsichtlich des ordnungsgemäßen Ausfüllens der Bördelnaht mittels des Klebstoffs. Zudem ist vorgesehen, dass der Klebstoff einer Voraushärtung unterzogen wird, wobei auch einzelne Schweißpunkte vorgesehen werden, um eine Relativbewegung beider zu verbindender Bauteile zueinander zu verhindern. Bisher kann eine Füllrate von 100/100/>0 nur durch ein Herausquetschen des Klebstoffes aus der Bördelnaht erreicht werden, was einen erheblichen Reinigungsaufwand nach sich zieht, wie oben bereits zur WO94/21740 angedeutet. Mit einer SPC (Statistical Process Control) ähnlichen Überprüfung kann die Verbindung überprüft werden, wobei allerdings noch keine zerstörungsfreien Überprüfungsmethoden zum Verifizieren, ob die Bördelnaht korrekt ausgefüllt ist, hinreichend anwendbar sind.

Vor diesem Hintergrund liegt der vorliegenden Erfindung die Aufgabe zugrunde, ein Verfahren zum Herstellen einer Bördelnaht anzugeben, mit welchem sichergestellt werden kann, dass die Bördelnaht gegen Korrosion geschützt ist, wobei ungewollte Lufteinschlüsse ausgeschlossen werden können und wobei auf den Einsatz einer zusätzlichen Kantenversiegelung verzichtet werden kann.

Diese Aufgabe wird durch ein Verfahren mit den Merkmalen des Anspruchs 1 gelöst. Weitere, besonders vorteilhafte Ausgestaltungen der Erfindung offenbaren die Unteransprüche.

Es ist darauf hinzuweisen, dass die in der nachfolgenden Beschreibung einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß umfasst ein Verfahren zum Herstellen einer Bördelnaht zwischen einem inneren Bauteil mit einem Fügeflansch und einem äußeren Bauteil mit einem Falzflansch zumindest die folgenden Schritte:
Auflegen eines Klebstoffstreifens im kalten Zustand auf die Stirnkante des Fügeflansches,
Erwärmen des Klebstoffstreifens,
Ankleben des Klebstoffstreifens an einer Seite oder beiden Seiten des Fügeflansches,
Anlegen des inneren Bauteils an das äußere Bauteil,
Umfalzen des Falzflansches in Richtung zum inneren Bauteil, wobei der Klebstoffstreifen nach dem Umfalzen des Falzflansches in Richtung zum inneren Bauteil mit seinen freien Kanten innerhalb eines Falzspaltes angeordnet ist, so dass jeweils ein Ausdehnungsraum gebildet ist, und
Auftragen einer Lackschicht, welche ebenfalls in den Ausdehnungsräumen des Falzspaltes aufgetragen wird, und sich auch auf die freien Kanten des Klebstoffstreifens legt, so dass der Klebstoffstreifen von der Lackschicht eingehaust ist, und dann
Erhitzen zumindest des Bördelnahtbereiches zum Aushärten des Klebstoffstreifens.

Bei gattungsmäßigen Bördelnähten wird Klebstoff auf beiden Seiten des Fügeflansches benötigt. Dazu wird der Klebstoffstreifen auf die Stirnseite des Fügeflansches aufgebracht, wobei der Klebstoffstreifen sich im kalten oder leicht vorgewärmten Zustand befindet, d.h. er weist eine geringe Klebrigkeit bzw. geringen Tack auf, und er ist auch relativ steif. Der Klebstoffstreifen ist nur so flexibel und klebrig, damit er auf der Stirnkante aufgelegt werden kann und dort nicht verrutscht. Ein solcher Klebstreifen lässt sich jedoch nicht in beide Richtungen um die Stirnkante des Fügeflansches biegen. Durch die Erwärmung nach dem Auflegen wird der Klebestreifen klebrig und bleibt an der Stirnkante kleben. Gleichzeitig wird er weich und kann auf beiden Seiten des Fügeflansches angeklebt werden. Üblicherweise erfolgt das Auflegen und das Erwärmen in unmittelbar aufeinanderfolgenden Arbeitsschritten, indem z.B. ein Applikationskopf den Klebstofftreifen aufbringt und dieser Applikationskopf auch geeignete Erwärmungsmittel aufweist.

Beim Erwärmen sollte der Klebstoffstreifen nur soweit erwärmt werden, dass er nicht aushärtet oder den Aushärtevorgang startet. Die Erwärmung soll nur soweit erfolgen, den Klebstoffstreifen klebrig und weich zu machen, damit dieser an den in der Regel nicht gerade verlaufenden Fügeflansch angeklebt werden kann. Durch dieses Verfahren kann ein schwierig zu handhabender Klebstoffstreifen sicher auf einen gekrümmten Fügeflansch aufgebracht werden.

Vorteilhaft wird der Klebestoffstreifen von oben auf die Stirnkante gesetzt. Dadurch kann der Klebestreifen rechts und links der Stirnkante beim Erwärmen unter Schwerkrafteinfluß nach unten umknicken.

Die Erwärmung des Klebstreifens kann durch jede geeignete Wärmequelle erfolgen, z. B. Infrarot, Laserlicht. Bevorzugt wird Heißluft verwendet, durch eine oder mehrere Düsen.

Das Ankleben des erwärmten Klebstoffstreifens erfolgt bevorzugt mittels Luftstrahlen, die den Klebstoffstreifen ein- oder beidseitig gegen den Fügeflansch drücken. Durch die erhöhte Klebrigkeit bzw. erhöhten Tack des erwärmten Klebstoffstreifens bleibt dieser leicht am Fügeflansch kleben.

Besonders bevorzugt dient Heißluft zum Erwärmen und Ankleben des Klebstoffstreifens. Damit kann das Erwärmen und Ankleben in einem Arbeitsgang erfolgen. Dazu geeignet sind Heißluftdüsen, die mittels eines Heißluftstrahls oder mehrerer Heißluftstrahlen den Klebstoffstreifen gegen den Fügeflansch drücken. Der erwärmte Klebestreifen bleibt dort sofort kleben.

Vorteilhaft steht die Stirnkante des Fügeflansches beim Auflegen und/oder Ankleben des Klebstoffstreifens überwiegend waagerecht und/oder der Fügeflansch beim Auflegen und/oder Ankleben des Klebstoffstreifens in Querrichtung gesehen überwiegend senkrecht. Wenn der Klebestreifen von oben auf die Stirnkante gesetzt wird, kann er bereits unter Schwerkraft gleichförmig rechts und links der Stirnkante beim Erwärmen nach unten wegknicken und so gleichmäßig am Fügeflansch zum Ankleben kommen.

Die Bauteile erhalten nach dem Umfalzen und vor dem Erhitzen der Bördelnaht eine Schutzlackierung. Dann werden alle Bereiche, die vom Klebstoffstreifen nicht bedeckt sind, lackiert. Insbesondere wenn der Kleber des Klebstoffstreifens beim Erhitzen expandiert, wird der Kleber des Klebstoffstreifens über die Lackierung expandieren und sorgt so für einen verbesserten Korrosionsschutz.

Der Falzspalt ist zwischen Fügeflansch und Falzflansch gebildet, und der Klebstoffstreifen weist zumindest abschnittsweise eine Erstreckung auf, die zumindest an einem Ende des Falzspaltes kürzer ist als die Erstreckung des Falzspaltes. Damit wird sicher erreicht, dass die Bauteile im Falzspalt vor dem Aushärten lackiert werden, wodurch nach dem Aushärten und Expandieren des Klebers der Falzspalt gut gegen Korrosion geschützt ist.

Weitere vorteilhafte Einzelheiten und Wirkungen der Erfindung sind im Folgenden anhand von in den Figuren dargestellten Ausführungsbeispielen näher erläutert. Es zeigen:
- Fig. 1a bis 1d: eine prinzipielle Schnittansicht mit einzelnen Schritten zum Herstellen einer Bördelnaht, und
- Fig. 2a bis 2c: eine beispielhafte Vorgehensweise zum Anbringen des Strukturklebstreifens an einem der Bauteile.

In den unterschiedlichen Figuren sind gleiche Teile stets mit denselben Bezugszeichen versehen, so dass diese in der Regel auch nur einmal beschreiben werden.

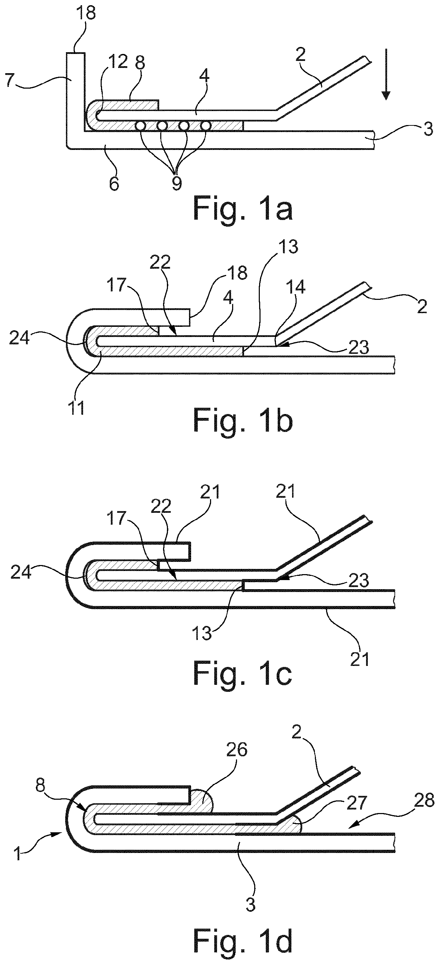

Die Figuren 1a bis 1d zeigen ein Verfahren zur Herstellen einer Bördelnaht 1 zwischen einem inneren Bauteil 2 und einem äußeren Bauteil 3. Das innere Bauteil 2 ist beispielsweise ein Türinnenblech eines Kraftfahrzeuges und weist einen Fügeflansch 4 auf, welcher beispielhaft in einem Winkel zu dem inneren Bauteil 2 angeordnet ist. Das äußere Bauteil 3 ist beispielsweise ein Türaußenblech des Kraftfahrzeuges, und weist einen an einem Kantenabschnitt 6 angeordneten Falzflansch 7 auf.

Zunächst wird ein Klebstoffstreifen 8 aufgebracht. Der Klebstoffstreifen 8 wird mit einer solchen Erstreckung erzeugt, dass der Klebstoffstreifen 8 kürzer ist als ein Falzspalt 11 (Figur 1 b). Der Klebstoffstreifen 8 weist also eine Breite auf, die kürzer, also schmaler ist als die Erstreckung des gesamten Falzspaltes 11. Der Klebstoffstreifen 8 weist Abstandhalter 9 auf, welche in Figur 1a prinzipiell dargestellt sind. Auf die Abstandhalter 9 wird weiter unten noch eingegangen.

Der Klebstoffstreifen 8 wird so aufgebracht, dass dieser eine Stirnkante 12 des inneren Bauteils 2 so umfasst, dass der Klebstoffstreifen 8 um das innere Bauteil 2 mit einer solchen Erstreckung um das innere Bauteil 2 herumgeführt ist, welche kürzer als der Falzspalt 11 ist. Anschließend wird der Falzflansch 7 in Richtung zum inneren Bauteil 2 gefalzt (Figur 1b). Dabei kann der Falzflansch 7 direkt vollständig umgefalzt werden, wobei aber auch ein Vorbördeln von z.B. 45° des Falzflansches 7 in Richtung zum inneren Bauteil 2 denkbar ist, und erst nach möglicher visueller Überprüfung das vollständige Umfalzen weitergeführt wird.

Die bisherigen Schritte wurden ohne Wärmeeinfluss durchgeführt, wobei in Figur 1 b erkennbar ist, dass der Klebstoffstreifen 8 im kalten Zustand kürzer, also schmaler ist als der Falzspalt 11. Dabei ist das Klebstoffstreifen 8 mit seiner inneren freien Kante 13 innerhalb des Falzspaltes 11 angeordnet und zu einem Übergang 14 des Fügeflansches 4 des inneren Bauteils 2, also zu dem Winkel zwischen beiden beabstandet. Die zur inneren Kante 13 gegenüberliegende äußere freie Kante 17 des Klebstoffstreifens 8 ist ebenfalls innerhalb des Falzspaltes 11, jedoch zur freien Kante 18 des Falzflansch 7 beabstandet. So ist jeweils ein Ausdehnungsraum 22 und 23 gebildet.

Wird der Klebstoffstreifen 8 unter Wärmeeinfluss aufgebracht, ohne dass der Klebstoffstreifen 8 expandiert, wird dieser zunächst abgekühlt, bevor der Falzflansch 7 umgefalzt wird.

Ist der Falzflansch 7 gefalzt, also ist der Zustand nach Figur 1b erreicht, wird eine Lackschicht 21 aufgetragen (Figur 1c). Die Lackschicht 21 wird bevorzugt so aufgebracht, dass nicht nur der Bereich der Bördelnaht 1, sondern auch angrenzende Bereiche der beiden Bauteile 2 und 3 mit der Lackschicht 21 versehen sind. Bevorzugt sind die beiden Bauteile 2 und 3 vollständig mit der Lackschicht 21 versehen, was sinnvoll ist, wenn diese als Korrosionsschutzgrundierung ausgeführt ist.

Wie in Figur 1c erkennbar, wird die Lackschicht 21 ebenfalls in den Ausdehnungsräumen 22 und 23 des Falzspaltes 11 aufgetragen, und legt sich auch auf die Kanten 13 und 17 des Klebstoffstreifens 8. So ist der Klebstoffstreifen 8 quasi von der Lackschicht 21 eingehaust.

Ist die Lackschicht 21 aufgebracht, wird zumindest der Bördelnahtbereich einer Wärmebehandlung unterzogen, also erwärmt. Dabei kann eine in einem Elektroofen durchzuführende Wärmebehandlung bei beispielsweise 175°C z.B. 10 Minuten lang ausreichend sein, so dass das Klebstoffstreifen 8 in den jeweiligen Ausdehnungsraum 22 und 23, aus dem Falzspalt 11 heraus, aber auch in alle anderen Richtungen expandieren kann. In Figur 1c beispielsweise, ist ein Luftspalt 24 erkennbar, welcher nach der Wärmebehandlung (Figur 1d) ausgefüllt ist. Die genannten Werte sind natürlich nur beispielhaft und keinesfalls beschränkend genannt.

Den Zustand nach der Wärmebehandlung zeigt Figur 1d. Die Figur 1d zeigt, dass der Klebstoffstreifen 8 unter anderem aus dem Falzspalt 11 herausgetreten ist und jeweils eine Dichtwulst 26, 27 gebildet ist, die sich zum einen um die freie Kante 18 des Falzflansch 7, und zum anderen den Übergang 14 des freien Kantenabschnittes 4 des inneren Bauteils 2 überbrückend in den Zwischenraum 28 zwischen dem inneren Bauteil 2 und dem äußeren Bauteil 3 beide abdichtend einlegt. Insofern ist nach der Erwärmung eine Füllrate von zumindest 100/100/>0 insbesondere auch kritischer Bereiche wie zum Beispiel von Ecken, Rundungen sowie auch von Designlinien erreichbar. Da der Klebstoffstreifen 8 den Falzspalt 11 zunächst nicht vollständig ausfüllt, jedoch mit seinen freien Kanten 13 und 17 lediglich gering beabstandet zu den betreffenden Elementen 14 und 18 angeordnet ist, ist in den Figuren nach der Expansion sogar eine Füllrate von 100/100/100 erkennbar.

Erkennbar ist in Figur 1d aber auch, dass die jeweilige Dichtwulst 26, 27 auch die Lackschicht 21 in den betreffenden Bereichen einhüllt.

Indem auch die Lackschicht 21 von dem expandierten Klebstoffstreifen 8 umgeben ist, ist eine besonders zielführende Abdichtung gegen eindringende Feuchtigkeit gewährleistet.

Der Klebstoffstreifen 8 kann beispielsweise ein einseitig klebendes Schmelzdichtband aus einem Acrylat-Epoxy-Hybridklebstoff sein.

Alle Schritte können automatisiert, beispielsweise mittels eines Roboters durchgeführt werden. In bevorzugter Ausführung werden Streifen jeweils anpassbarer Länge des Klebstoffstreifens 8 abgelängt, und an einem der beiden Bauteile 2 oder wie oben beschrieben aufgelegt. Zielführend dabei ist, dass das Klebstoffstreifen 8 im kalten Zustand die jeweils an den zu erwarten Falzspalt 11 angepasste Breite aufweist, so dass jeweils der Ausdehnungsraum 22 und 23 gebildet ist, wobei der Klebstoffstreifen eine Dicke von 0,3 bis 1 mm aufweisen kann.

Wie oben bereits erwähnt, kann der Klebstoffstreifen feinverteilte Abstandhalter 9, insbesondere in der Ausgestaltung als Glaskügelchen aufweisen. Die Abstandhalter 9 können einen definierten Abstand der beiden Karosserieteile 2,3 definieren, so dass beide Bauteile 2,3, insbesondere nach dem Umfalzen einen homogenen Abstand zumindest im Bereich des Falzspaltes 11 aufweisen. Ein homogener Abstand zwischen beiden Bauteilen 2,3 kann dahingehend als vorteilhaft angesehen werden, dass der Falzspalt 11 ebenso homogen ausgefüllt werden kann. Insofern kann zweckmäßiger Weise vorgesehen werden, dass die Abstandhalter 9 Dimensionen, also Abmessungen im Bereich der Falzspaltweite aufweisen. Die Abstandhalter 9 können unterschiedliche geometrische Ausgestaltungen aufweisen, wobei die Abstandhalter 9 in einem Klebstoffstreifen bevorzugt die gleiche geometrische Ausgestaltung aufweisen sollten. Solche Abstandhalter 9 können beispielhaft als Tetraeder, als Kugel, als Würfel, oder als Oktaeder ausgeführt sein, um nur einige nicht beschränkende Ausgestaltungen zu nennen. Die Dimensionen der Abstandhalter 9 sind natürlich variabel, aber vorzugsweise unmittelbar abhängig von der herzustellen Bördelnaht 1. Insbesondere können die Abstandhalter 9 ein Minimalvolumen gewährleisten, um eine kontrollierte Expansion des Klebstoffstreifens 8 erreichen zu können. Auch der Werkstoff der Abstandhalter 9 ist natürlich nicht auf den Werkstoff Glas beschränkt. Beispielhaft können die Abstandhalter 9 auch aus einer Keramik oder aus mineralischen Rohstoffen bestehen. Die geometrischen Abstandhalter 9 dienen so auch zur Gewährleistung von gleichmäßigen Flanschgeometrien nach dem Bördelvorgang.

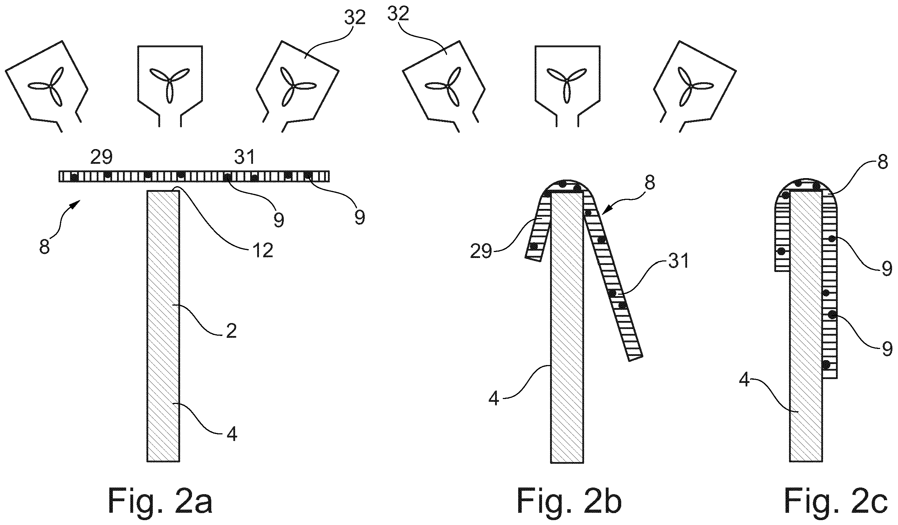

In den Figuren 2a bis 2c ist eine mögliche Vorgehensweise dargestellt, wie der Klebstoffstreifen um den freien Kantenabschnitt 4 des inneren Bauteils 2 gelegt wird. Der Klebstoffstreifen 8 ist beispielhaft als beidseitig klebendes Schmelzdichtband ausgeführt.

Der Klebstoffstreifen 8 wird auf die Stirnseite 12 des freien Kantenabschnittes 4 gelegt, wobei der Klebstoffstreifen 8 mit seinen überstehenden Schenkeln 29 und 31, also mit seinem Überstand 29 und mit seinem Befestigungsabschnitt 31 in Richtung zum Fügeflansch 4 verformt wird, so dass ein Fügeflansch 4 bereichsweise umgebender Klebstoffstreifen 8 an dem Fügeflansch 4 haftet. Zum Umformen des Klebstoffstreifens 8 in Richtung zum Fügeflansch 4 können beispielhaft Heißluftdüsen 32 vorgesehen werden. Die Heißluft erwärmt den Klebstreifen 8 mit einer solch geringen Temperatur, dass ein Umformen möglich ist, wobei eine Expansion aber ausgeschlossen ist. Ist der Klebstoffstreifen 8 um den freien Kantenabschnitt 4 gelegt (Figur 2c), wird der Klebstoffstreifen 8 abgekühlt, wobei ein Abkühlen auf Raumtemperatur ausreichend ist. Die Abstandhalter 9 sind in dem Klebstoffstreifen 8 erkennbar, welche durchaus unterschiedliche Dimensionen haben können, wie in Figur 2a bis Figur 2c erkennbar ist.

## Patentansprüche

1. Verfahren zum Herstellen einer Bördelnaht (1) zwischen einem inneren Bauteil (2) mit einem Fügeflansch (4) und einem äußeren Bauteil (3) mit einem Falzflansch (7) mit zumindest den folgenden Schritten
Auflegen eines Klebstoffstreifens (8) auf die Stirnkante (12) des Fügeflansches (4),
Erwärmen des Klebstoffstreifens (8),
Ankleben des Klebstoffstreifens (8) an einer Seite oder beiden Seiten des Fügeflansches (4),
Anlegen des inneren Bauteils (2) an das äußere Bauteil (3),
Umfalzen des Falzflansches (7) in Richtung zum inneren Bauteil (2), wobei der Klebstoffstreifen (8) nach dem Umfalzen des Falzflansches (7) in Richtung zum inneren Bauteil (2) mit seinen freien Kanten (13,17) innerhalb eines Falzspaltes (11) angeordnet ist, so dass jeweils ein Ausdehnungsraum (22,23) gebildet ist, und
Auftragen einer Lackschicht (21), welche ebenfalls in den Ausdehnungsräumen (22, 23) des Falzspaltes (11) aufgetragen wird, und sich auch auf die freien Kanten (13,17) des Klebstoffstreifens (8) legt, so dass der Klebstoffstreifen (8) von der Lackschicht (21) eingehaust ist, und dann
Erhitzen zumindest des Bördelnahtbereiches zum Aushärten des Klebstoffstreifens (8).

2. Verfahren nach Anspruch 1,
**dadurch gekennzeichnet, dass**
der Klebstoffstreifen (8) von oben auf die Stirnkante (12) des Fügeflansches (4) aufgelegt wird.

3. Verfahren nach Anspruch 1 oder 2,
**dadurch gekennzeichnet, dass**
die Stirnkante (12) des Fügeflansches (4) beim Auflegen und/oder Ankleben des Klebstoffstreifens (8) überwiegend waagerecht steht.

4. Verfahren nach einem der vorhergehenden Ansprüche,
**dadurch gekennzeichnet, dass**
der Fügeflansch (4) beim Auflegen und/oder Ankleben des Klebstoffstreifens (8) in Querrichtung gesehen überwiegend senkrecht steht.

5. Verfahren nach Verfahren nach einem der vorhergehenden Ansprüche,
**dadurch gekennzeichnet, dass**
der Klebstoffstreifen (8) im kalten Zustand auf die Stirnkante (12) des Fügeflansches (4) aufgelegt wird.

6. Verfahren nach Verfahren nach einem der Ansprüche 1 bis 4,
**dadurch gekennzeichnet, dass**
der Klebstoffstreifen (8) vor dem Auflegen auf die Stirnkante (12) des Fügeflansches (4) vorgewärmt wird.

7. Verfahren nach einem der vorhergehenden Ansprüche,
**dadurch gekennzeichnet, dass**
der Klebstoffstreifen (8) zum Erwärmen mit Heißluft angeblasen wird.

8. Verfahren nach einem der vorhergehenden Ansprüche,
**dadurch gekennzeichnet, dass**
der Klebstoffstreifen (8) zum Ankleben mit einem oder mehreren Luftstrahl bzw. Luftstrahlen beaufschlagt wird.

9. Verfahren nach einem der vorhergehenden Ansprüche,
**dadurch gekennzeichnet, dass**
der Klebstoffstreifen (8) zum Erwärmen und Ankleben mit Heißluft angeblasen wird.

10. Verfahren nach einem der vorhergehenden Ansprüche,
**dadurch gekennzeichnet, dass**
das Ankleben des Klebstoffstreifens (8) unter Schwerkraft erfolgt.

11. Verfahren nach einem der vorhergehenden Ansprüche,
**dadurch gekennzeichnet, dass**
der Kleber des Klebstoffstreifens (8) beim Erhitzen expandiert.

## Claims

1. Method for producing a double-flanged seam (1) between an inner component (2) having a wing flange (4) and an outer component (3) having a fold flange (7), comprising at least the following steps:
applying an adhesive strip (8) to the front edge (12) of the wing flange (4),
heating up the adhesive strip (8),
gluing the adhesive strip (8) on to one side or both sides of the wing flange (4),
applying the inner component (2) to the outer component (3),
crimping over the fold flange (7) toward the inner component (2), wherein, after crimping over the fold flange (7) toward the inner component (2), the adhesive strip (8) is arranged with the free edges (13, 17) thereof within a fold gap (11), and therefore an expansion space (22, 23) is formed in each case, and
applying a paint coating (21) which is likewise applied in the expansion spaces (22, 23) of the fold gap (11) and is also applied to the free edges (13, 17) of the adhesive strip (8), and therefore the adhesive strip (8) is housed by the paint coating (21), and then
heating up at least the double-flanged seam region to cure the adhesive strip (8).

2. Method according to Claim 1,
**characterized in that**
the adhesive strip (8) is applied from above to the front edge (12) of the wing flange (4).

3. Method according to Claim 1 or 2, **characterized in**
**that**
the front edge (12) of the wing flange (4) is predominantly horizontal during the application and/or gluing of the adhesive strip (8).

4. Method according to one of the preceding claims,
**characterized in that**
the wing flange (4) is predominantly vertical, as seen in the transverse direction, during the application and/or gluing of the adhesive strip (8).

5. Method according to one of the preceding claims,
**characterized in that**
the adhesive strip (8) is applied in the cold condition to the front edge (12) of the wing flange (4).

6. Method according to one of Claims 1 to 4,
**characterized in that**
the adhesive strip (8) is preheated before being applied to the front edge (12) of the wing flange (4).

7. Method according to one of the preceding claims,
**characterized in that**
the adhesive strip (8) is blasted with hot air for heating purposes.

8. Method according to one of the preceding claims,
**characterized in that**
the adhesive strip (8) is subjected to an air jet or to a plurality of air jets for gluing purposes.

9. Method according to one of the preceding claims,
**characterized in that**
the adhesive strip (8) is blasted with hot air for heating and gluing purposes.

10. Method according to one of the preceding claims,
**characterized in that**
the adhesive strip (8) is glued under gravitational force.

11. Method according to one of the preceding claims,
**characterized in that**
the glue of the adhesive strip (8) expands during heating.

## Revendications

1. Procédé de fabrication d'un joint à bords sertis (1) entre un composant intérieur (2) ayant une bride de jonction (4) et un composant extérieur (3) ayant une bride de pliage (7), comportant au moins les étapes suivantes :
appliquer un ruban adhésif (8) sur l'arête frontale (12) de la bride de jonction (4),
chauffer le ruban adhésif (8),
coller le ruban adhésif (8) à un côté ou aux deux côtés de la bride de jonction (4),
appliquer le composant intérieur (2) sur le composant extérieur (3),
rabattre la bride de pliage (7) dans la direction du composant intérieur (2), dans lequel le ruban adhésif (8), après que la bride de pliage (7) a été rabattue dans la direction du composant intérieur (2) avec ses arêtes libres (13, 17), est disposé à l'intérieur de l'intervalle de pliage (11), de manière à ce qu'un espace de dilatation (22, 23) soit respectivement formé, et
déposer une couche de peinture (21), qui est également appliquée dans les espaces de dilatation (22, 23) de l'intervalle de pliage (11), et se superpose également sur les arêtes libres (13, 17) du ruban adhésif (8), de manière à ce que le ruban adhésif (8) soit abrité par la couche de peinture (21), puis
chauffer au moins le joint à bords sertis pour durcir le ruban adhésif (8).

2. Procédé selon la revendication 1,
**caractérisé en ce que** le ruban adhésif (8) est appliqué depuis le haut vers l'arête frontale (12) de la bride de jonction (4).

3. Procédé selon la revendication 1 ou 2,
**caractérisé en ce que** l'arête frontale (12) de la bride de jonction (4) est principalement horizontale lors de l'application et/ou du collage du ruban adhésif (8).

4. Procédé selon l'une quelconque des revendications précédentes,
**caractérisé en ce que** la bride de jonction (4) est principalement verticale lorsqu'elle est vue dans une direction transversale lors de l'application et/ou du collage du ruban adhésif (8).

5. Procédé selon l'une quelconque des revendications précédentes,
**caractérisé en ce que** le ruban adhésif (8) est appliqué à l'état froid sur l'arête frontale (12) de la bride de jonction (4).

6. Procédé selon l'une quelconque des revendications 1 à 4,
**caractérisé en ce que** le ruban adhésif (8) est préchauffé avant l'application sur l'arête frontale (12) de la bride de jonction (4).

7. Procédé selon l'une quelconque des revendications précédentes,
**caractérisé en ce que** le ruban adhésif (8) est ventilé avec de l'air chaud à des fins de chauffage.

8. Procédé selon l'une quelconque des revendications précédentes,
**caractérisé en ce que** le ruban adhésif (8) est soumis à un jet d'air ou à plusieurs jets d'air à des fins de collage.

9. Procédé selon l'une quelconque des revendications précédentes,
**caractérisé en ce que** le ruban adhésif (8) est ventilé avec de l'air chaud aux fins du chauffage et du collage.

10. Procédé selon l'une quelconque des revendications précédentes,
**caractérisé en ce que** le collage du ruban adhésif (8) est effectué par gravitation.

11. Procédé selon l'une quelconque des revendications précédentes,
**caractérisé en ce que** l'adhésif du ruban adhésif (8) se dilate lors du chauffage.
